(19) **Europäisches Patentamt / European Patent Office / Office européen des brevets**

(11) **EP 3 158 264 B1**

(12) **FASCICULE DE BREVET EUROPEEN**

(45) Date de publication et mention
de la délivrance du brevet:
**18.12.2019 Bulletin 2019/51**

(21) Numéro de dépôt: **15732185.2**

(22) Date de dépôt: **18.06.2015**

(51) Int Cl.:
*F23C 99/00* (2006.01)      *B01J 8/26* (2006.01)
*C10J 3/00* (2006.01)

(86) Numéro de dépôt international:
**PCT/EP2015/063745**

(87) Numéro de publication internationale:
**WO 2015/193450 (23.12.2015 Gazette 2015/51)**

(54) **PROCÉDÉ ET INSTALLATION DE COMBUSTION PAR OXYDO-RÉDUCTION EN BOUCLE CHIMIQUE AVEC UN CONTROLE DES ÉCHANGES DE CHALEUR**

VERFAHREN UND VORRICHTUNG FÜR CHEMICAL-LOOPING-COMBUSTION MIT STEUERUNG DES WÄRMAUSTAUSCHES

PROCESS AND APPARATUS FOR CHEMICAL LOOPING COMBUSTION WITH CONTROL OF THE HEAT EXCHANGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2014 FR 1455668**

(43) Date de publication de la demande:
**26.04.2017 Bulletin 2017/17**

(73) Titulaires:
• **IFP Energies nouvelles**
**92500 Rueil-Malmaison (FR)**
• **Total Raffinage Chimie**
**92400 Courbevoie (FR)**

(72) Inventeurs:
• YAZDANPANAH, Mahdi
**76600 LE HAVRE (FR)**
• GAUTHIER, Thierry
**F-69530 Brignais (FR)**
• GUILLOU, Florent
**F-69360 Ternay (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 2 997 318      US-A1- 2011 120 560**
**US-A1- 2012 167 808**

**Description**

**Domaine de l'invention**

La présente invention concerne le domaine de la combustion de charges hydrocarbonées par oxydo-réduction en boucle chimique (CLC), et plus particulièrement le contrôle des échanges de chaleur dans une telle boucle chimique.

**Contexte général**

Dans la suite du texte, on entend par procédé de combustion par oxydo-réduction en boucle chimique, ou procédé de Chemical Looping Combustion (CLC) dans sa terminologie anglo-saxonne, un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite. Les réacteurs opèrent en lit fluidisé et la masse active circule entre le réacteur d'oxydation et le réacteur de réduction. La technologie du lit fluidisé circulant est utilisée pour permettre le passage continu de la masse active de son état oxydé dans le réacteur d'oxydation à son état réduit dans le réacteur de réduction.

Dans un contexte de demande énergétique mondiale croissante, la capture du dioxyde de carbone ($CO_2$) en vue de sa séquestration est devenue une nécessité incontournable afin de limiter l'émission de gaz à effet de serre préjudiciable à l'environnement. Le procédé CLC permet de produire de l'énergie à partir de combustibles hydrocarbonés tout en facilitant la capture du $CO_2$ émis lors de la combustion.

Le procédé CLC consiste à mettre en œuvre des réactions d'oxydo-réduction d'une masse active, typiquement un oxyde métallique, pour décomposer la réaction de combustion en deux réactions successives. Une première réaction d'oxydation de la masse active, avec de l'air ou un gaz oxydant, permet d'oxyder la masse active.

Une seconde réaction de réduction de la masse active ainsi oxydée à l'aide d'un gaz réducteur permet ensuite d'obtenir une masse active réutilisable ainsi qu'un mélange gazeux comprenant essentiellement du $CO_2$ et de l'eau, voire du gaz de synthèse contenant de l'hydrogène et du monoxyde de carbone. Cette technique permet donc d'isoler le $CO_2$ ou le gaz de synthèse dans un mélange gazeux pratiquement dépourvu d'oxygène et d'azote.

La combustion par boucle chimique permet de produire de l'énergie, sous la forme de vapeur ou d'électricité par exemple. La chaleur de combustion de la charge est similaire à celle rencontrée dans la combustion classique. Celle-ci correspond à la somme des chaleurs de réduction et d'oxydation dans la boucle chimique. La chaleur est généralement extraite par des échangeurs situés à l'intérieur, en paroi ou en appendice des enceintes de combustion et/ou d'oxydation, sur les lignes de fumées, ou sur les lignes de transfert d'oxydes métalliques.

Outre l'intérêt de récupérer la chaleur de combustion pour produire de l'énergie, il est important de pouvoir contrôler la température dans un procédé CLC. La température des réactions dans les zones d'oxydation et de réduction doit en effet être maîtrisée pour des raisons de sécurité et pour garantir les bonnes performances du procédé. Cette récupération de chaleur pour réguler la température du procédé est de préférence réalisée par échange de chaleur avec la masse active circulant dans la boucle.

Cette récupération de chaleur peut être effectuée au niveau des parois des réacteurs d'oxydation de réduction dans un procédé CLC. Cependant, cette configuration peut ne pas être optimale, notamment car les échanges thermiques sont limités en raison d'une surface d'échange limitée aux parois et du fait que seule une partie des particules est en contact avec cette surface d'échange, mais également parce qu'il n'est pas toujours envisageable de modifier le débit de solide transporteur d'oxygène dans ces zones de réactions à des seules fin de contrôle des échanges de chaleur. En effet, le débit du solide transporteur d'oxygène est directement lié à la quantité d'oxygène mise en jeu pour la combustion, et toute modification du débit du solide transporteur d'oxygène a un impact sur la réalisation des réactions, pouvant par exemple poser des problèmes de gestion du combustible et/ou de stœchiométrie des réactions, et au final nuire au rendement du procédé.

Il peut être envisagé d'utiliser des échangeurs de chaleur en dehors des enceintes de combustion et/ou d'oxydation.

De manière générale, de tels dispositifs d'échange de chaleur en lit fluidisé sont connus dans certains domaines comme celui des centrales thermiques à lit fluidisé circulant, et sont identifiés sous les sigles FBHE (Fluidized Bed Heat Exchanger, selon la terminologie-saxonne, ou échangeur de chaleur en lit fluidisé) ou EHE (external heat exchanger en termes anglo-saxons, ou échangeur de chaleur externe). Ils se présentent généralement sous la forme d'une capacité comprenant une arrivée de solide sous forme de particules, un dispositif de fluidisation au moyen d'un gaz, une sortie gaz et une évacuation du solide (Q. Wang et al., Chemical Engineering and Processing 42 (2003) 327 - 335). Le document US2011/0120560 décrit l'utilisation d'un tel type d'échangeur de chaleur sur une ligne de transport entre deux réacteurs fluidisés, par exemple dans un système CLC. Les lignes de transport entre les réacteurs fluidisés d'un CLC peuvent aussi comprendre des dispositifs intermédiaires fluidisés comme un séparateur de particules tel que décrit dans la document US2012/167808. La forme en deux parties des revendications 1 et 9 est basée sur US2011/0120560. Pour effectuer un échange de chaleur, des faisceaux de tubes sont classiquement implantés dans le lit fluidisé afin de générer une surface d'échange entre le lit fluidisé et un fluide caloporteur circulant dans les tubes. Classiquement dans le domaine de l'énergie, et en particulier dans les centrales thermiques, le fluide caloporteur est de l'eau de chaudière pressurisée qui est soit réchauffée, soit au moins partiellement vaporisée, soit surchauffée dans les faisceaux de tubes de l'échangeur de chaleur. Ces échangeurs fonctionnent généralement selon un mécanisme de débordement pour l'évacuation du solide, tels que par exemple illustré dans le brevet US4,716,856, ou par Wang et al. 2003. Wang et al. (Chemical Engineering and Processing 42, 2003, pp 327 - 335). Le recours à un débordement implique que le volume du lit fluidisé est constant, et par conséquent que la surface d'échange avec le lit fluidisé est constante. Cela entraîne une impossibilité de moduler la récupération de chaleur par une variation de cette surface et oblige à moduler les paramètres d'opération, comme par exemple le flux de solide traversant la zone d'échange.

On peut alors avoir recours à un dispositif de contrôle du flux de solide tel qu'une vanne mécanique, comme cela est décrit dans le brevet EP 0 090 641 A2. Un inconvénient de cette solution est de recourir à un dispositif mécanique pour le contrôle du flux de solide. Ce type de solution est particulièrement limitatif dans le cas de procédés opérant à haute température, tel qu'un procédé CLC, et peut amener des problèmes de fiabilité inhérents à l'implantation d'un dispositif mécanique comportant des parties mobiles dans un lit de particules fluidisées abrasives à haute température.

Afin de réguler un flux de solide, il est possible d'utiliser des vannes non mécaniques, telles que les vannes pneumatiques décrites dans la demande de brevet WO 2011/007055 mises en œuvre pour contrôler la circulation des particules solides de masse active dans un procédé CLC. Ce type de vanne pneumatique permet de répondre à la problématique de la température et de l'abrasion. Cependant, le bon fonctionnement de ces vannes pneumatiques est limité à l'utilisation de certaines classes de particules, en l'occurrence les particules du groupe B de la classification de Geldart.

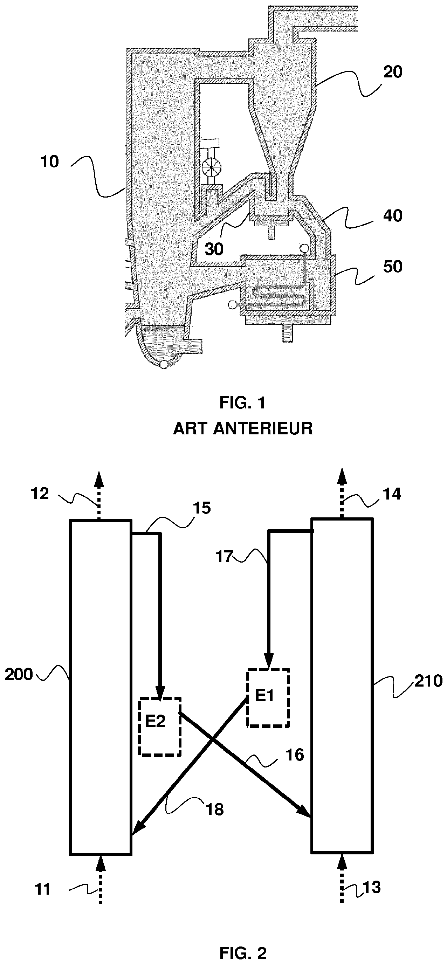

La figure 1 (extrait de K. Shakourzadeh, Techniques de fluidisation, ref J3390 Techniques de l'Ingénieur, page 10) illustre un système particulier permettant de modifier le flux solide traversant un échangeur de chaleur en lit fluidisé externe fonctionnant par débordement, avec l'utilisation possible d'une vanne sur le flux solide entrant dans l'échangeur. Ce système est implanté dans une installation classique de combustion (à l'air) de charbon en lit circulant comprenant un réacteur de combustion 10 duquel s'échappe un mélange gazeux comprenant les gaz de combustion et des particules solides envoyé dans un cyclone 20. Un échangeur de chaleur externe 50 à débordement est disposé entre le cyclone 20 et le réacteur 10. Selon ce système, seule une partie du flux de solide récupéré en bas du cyclone 20 est envoyée par une conduite 40 dans l'échangeur de chaleur 50 avant de regagner le réacteur 10, l'autre partie du flux solide étant renvoyée par l'intermédiaire d'un ensemble siphon/ jambe de retour 30 vers le réacteur 10. Une vanne est généralement placée sur la conduite 40. L'échange de chaleur est ainsi contrôlé en modifiant le flux solide traversant l'échangeur 50. Cette configuration, consistant en une dérivation du flux solide et communément désignée sous le terme de by-pass, complexifie l'architecture de l'installation et le procédé dans lesquels elle est mise en œuvre et ce d'autant plus qu'elle implique d'avoir recours à une vanne sur le circuit du solide pour orienter ce dernier vers le by-pass.

D'une façon générale, les solutions consistant à moduler le flux de solide par une vanne afin de modifier le flux de chaleur peuvent nuire au bon fonctionnement du procédé et/ou limiter son fonctionnement. Par exemple, si l'on veut limiter, voire annuler l'échange entre le solide et le fluide caloporteur, il faut soit limiter ou arrêter le flux de solide, ce qui peut conduire au ralentissement ou à l'arrêt de l'unité, soit limiter ou arrêter la circulation de fluide caloporteur, ce qui peut endommager les faisceaux de tubes de l'échangeur de chaleur.

Il existe ainsi un besoin de fournir un procédé CLC amélioré dans lequel les échanges de chaleur avec le transporteur d'oxygène circulant peuvent se faire au sein d'un échangeur externe sans avoir recours à l'utilisation d'une vanne sur le flux solide pour modifier la quantité de chaleur échangée. Ce besoin se fait d'autant plus ressentir que la température du lit fluidisé circulant d'un procédé CLC peut être sensiblement plus élevée que dans le cas d'un procédé de combustion en lit circulant classique (CFB pour Circulating fluidized bed en anglais) selon la nature du porteur d'oxygène et de la charge traitée rendant l'implantation d'une vanne mécanique problématique.

**Objectifs et résumé de l'invention**

Dans ce contexte, l'invention vise à satisfaire au moins l'un des objectifs suivants:

- surmonter au moins en partie les problèmes de l'art antérieur mentionnés ci-dessus;
- fournir un procédé et une installation CLC simplifiés, notamment ne nécessitant pas d'avoir recours à un système de by-pass au niveau de l'échangeur de chaleur externe et/ou à l'utilisation de vannes sur le flux solide pour réguler la quantité de solide impliquée dans l'échangeur de chaleur. Une telle simplification tend à réduire de manière notable les coûts opératoires et d'investissements. En évitant en particulier le recours à des vannes sur le flux de solide qui traverse l'échangeur, notamment des vannes mécaniques, l'invention permet d'augmenter la fiabilité du contrôle des échanges de chaleur ;
- fournir un meilleur contrôle des échanges de chaleur avec le solide transporteur d'oxygène, en particulier en termes d'efficacité, de précision, de simplicité, et de rapidité ;

- permettre de réguler la température du procédé CLC, par exemple les températures pour la réalisation des réactions dans les zones de réduction et d'oxydation de la masse active, afin notamment de maîtriser les performances du procédé et la sécurité dans l'installation CLC;

- contrôler la quantité de chaleur échangée avec la masse active circulant dans la boucle chimique tout en gardant un débit de masse active quasi constant dans les zones de réduction et d'oxydation.

Ainsi, pour atteindre au moins l'un des objectifs susvisés, parmi d'autres, la présente invention propose, selon un premier aspect, un procédé de combustion d'une charge hydrocarbonée par oxydo-réduction en boucle chimique selon la revendication 1.

Selon une mise en œuvre, on envoie les particules de la masse active dans la zone réservoir situé en amont de l'échangeur de chaleur, ladite zone réservoir et ledit échangeur de chaleur étant compris dans une enceinte unique munie d'une paroi séparant verticalement l'enceinte en une première partie formant la zone réservoir et une deuxième partie formant l'échangeur de chaleur, et on compense la perte de charge appliquée dans l'échangeur de chaleur par une variation du niveau du lit de particules, de préférence fluidisé, dans la zone réservoir communiquant avec le lit fluidisé de l'échangeur de chaleur par un passage dans la paroi de l'enceinte.

Selon une autre mise en œuvre, on envoie les particules de la masse active dans l'échangeur de chaleur par une jambe d'entrée de l'échangeur de chaleur, ladite jambe d'entrée formant la zone réservoir.

Avantageusement, on évacue les particules de la masse active de l'échangeur de chaleur par une conduite située dans la partie inférieure de l'échangeur de de chaleur, ladite conduite ayant une forme de siphon.

De préférence, on contrôle l'ouverture d'une vanne mécanique positionnée sur l'évacuation du gaz de fluidisation de l'échangeur de chaleur pour l'application contrôlée de la perte de charge.

Avantageusement, on contrôle la température des moyens d'application contrôlée d'une perte de charge disposés sur l'évacuation du gaz de fluidisation à l'extérieur dudit échangeur de chaleur.

On peut ainsi refroidir lesdits moyens d'application contrôlée d'une perte de charge par mise en contact avec un circuit de circulation d'un liquide de refroidissement.

De préférence, on réalise l'échange de chaleur sur une ligne de transport acheminant les particules de la masse active de la zone de réduction vers la zone d'oxydation.

L'invention porte, selon un deuxième aspect, sur une installation pour réaliser la combustion d'une charge hydrocarbonée par oxydo-réduction en boucle chimique selon la revendication 9.

Selon un mode de réalisation, l'échangeur de chaleur et la zone réservoir sont formés par une enceinte unique munie d'une paroi séparant verticalement ladite enceinte en une première partie constituant la zone réservoir en amont d'une deuxième partie constituant l'échangeur de chaleur, la zone réservoir comprenant de préférence des moyens d'injection d'un gaz de fluidisation, ladite paroi comportant un passage pour le lit de particules de la masse active de la zone réservoir vers l'échangeur de chaleur, l'entrée des particules se faisant par une conduite disposée en partie haute de la zone réservoir.

Selon un mode de réalisation, l'entrée des particules de la masse active dans l'échangeur de chaleur se fait par une jambe d'entrée de l'échangeur de chaleur, ladite jambe d'entrée formant la zone réservoir.

Avantageusement, la sortie pour le flux de particules sortant dans l'échangeur de chaleur est effectuée dans une conduite située dans la partie inférieure de l'échangeur de de chaleur, ladite conduite ayant une forme de siphon.

De préférence, l'application contrôlée de la perte de charge est effectuée par une vanne mécanique positionnée sur l'évacuation du gaz de fluidisation de l'échangeur de chaleur.

De préférence, les moyens d'application contrôlée d'une perte de charge sont disposés sur l'évacuation du gaz de fluidisation à l'extérieur dudit échangeur de chaleur.

Avantageusement, l'installation comprend des moyens de refroidissement desdits moyens d'application contrôlée de la perte de charge, de préférence un circuit de circulation d'un liquide de refroidissement disposé en contact avec lesdits moyens d'application contrôlée de la perte de charge.

De préférence, l'installation comprend une première ligne de transport des particules pour acheminer les particules de la masse active issues de la zone de réduction vers la zone d'oxydation, une deuxième ligne de transport des particules pour acheminer les particules de la masse active issues de la zone d'oxydation vers la zone de réduction, et l'échangeur de chaleur est positionné sur au moins la première ligne de transport des particules.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

La figure 1 est un schéma représentant un système de by-pass pour l'échange de chaleur dans une installation de combustion classique de charbon d'une centrale thermique.

La figure 2 est un schéma d'une installation CLC selon l'invention.

La figure 3 est un schéma représentant le principe général du dispositif de contrôle d'échange de chaleur selon l'invention.

La figure 4 représente schématiquement un premier mode de réalisation du dispositif de contrôle d'échange de chaleur selon l'invention.

La figure 5 un schéma représentant un deuxième mode de réalisation du dispositif de contrôle d'échange de chaleur selon l'invention.

La figure 6 un schéma représentant un troisième mode de réalisation du dispositif de contrôle d'échange de chaleur selon l'invention.

Sur les figures, les mêmes références désignent des éléments identiques ou analogues.

## Description de l'invention

Dans la présente description, les expressions « matériau transporteur d'oxygène » et « masse active oxydo-réductrice » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. L'expression abrégée « masse active » ou le terme « solide » pourront être également utilisés.

### Masse active et charges traitées dans le procédé CLC selon l'invention

Dans le procédé CLC selon l'invention, les charges hydrocarbonées traitées peuvent être des charges hydrocarbonées solide, liquide ou gazeuse : combustibles gazeux (ex. : gaz naturel, syngas, biogaz), liquides (ex. : fuel, bitume, diesel, essences etc.), ou solides (ex. : charbon, coke, pet-coke, biomasse, sables bitumineux, etc.).

La masse oxydo-réductrice peut être composée d'oxydes métalliques, tels que par exemple des oxydes de Fe, Ti, Ni, Cu, Mn, Co, V, seuls ou en mélange, pouvant provenir de minerais (par exemple l'ilménite ou la pyrolusite) ou être synthétiques (par exemple des particules d'oxyde de nickel supportées sur alumine $NiO/NiAl_2O_4$), avec ou sans liant, et présente les propriétés d'oxydo-réduction requises et les caractéristiques nécessaires à la mise en œuvre de la fluidisation. La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 3 % poids, ce qui permet de n'utiliser qu'une fraction de la capacité de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures sur le parcours du lit.

La masse active est sous la forme de particules fluidisables, appartenant aux groupes A, B ou C de la classification de Geldart. A titre d'exemple, et de manière non limitative, les particules de la masse active oxydo-réductrice peuvent appartenir au groupe B de la classification de Geldart, et présenter une granulométrie telle que plus de 90 % des particules ont une taille comprise entre 100 $\mu$m et 500 $\mu$m, de préférence comprise entre 150 $\mu$m et 300 $\mu$m, pour une densité comprise entre 1 000 g/m$^3$ et 5 000 kg/m$^3$ et préférentiellement entre 1 500 g/m$^3$ et 4 000 kg/m$^3$. La présente invention est également particulièrement bien adaptée à l'utilisation de particules de masse active appartenant au groupe A de la classification de Geldart, notamment car l'invention permet de s'affranchir de l'utilisation de vannes sur un flux solide, en particulier de vannes pneumatiques, pour contrôler les échanges de chaleur.

La masse active oxydo-réductrice peut subir une phase d'activation de manière à augmenter ses capacités réactives, pouvant consister en une phase de montée en température, de préférence progressive, et de préférence sous atmosphère oxydante (par exemple sous air).

### Procédé CLC selon l'invention

La figure 2 illustre schématiquement la mise en œuvre du procédé CLC selon l'invention.

L'installation CLC selon comprend une zone réactionnelle d'oxydation 200 et une zone réactionnelle de réduction 210, chacune des zones comprenant au moins un réacteur opérant en lit fluidisé, entre lesquelles circule une masse active oxydo-réductrice sous forme de particules pour former une boucle d'oxydo-réduction. La masse active est transportée de la zone de réduction de 210 vers la zone d'oxydation 200 par une première ligne de transport (17,18) et de la zone d'oxydation 200 à la zone de réduction 210 par deuxième ligne de transport (15,16). Ces lignes de transport peuvent comporter des lignes de recycle de la masse active, permettant d'envoyer une partie de la masse active issu d'une zone réactionnelle dans cette même zone réactionnelle. Il est entendu que ces lignes de transport peuvent comporter divers dispositifs, parmi lesquels on peut citer, sans être exhaustif, des dispositifs de contrôle du flux de solide, tels que des vannes, des dispositifs de séparation gaz/solide, des dispositifs d'élutriation, ou des éléments d'étanchéité tels que des siphons.

La zone de réduction 210 comprend des moyens pour opérer en lit fluidisé, des moyens d'introduction d'une charge hydrocarbonée, des moyens d'alimentation en masse active, d'une évacuation d'un mélange composé des gaz issus de la combustion et des particules de la masse active réduites.

La zone de d'oxydation 200 est munie d'une alimentation en masse active réduite dans la zone de réduction, d'une alimentation en un gaz oxydant, et d'une sortie pour un mélange composé du gaz de fluidisation oxydant appauvri en oxygène et des particules de la masse active oxydées.

Selon l'invention, au moins un échangeur de chaleur est disposé sur une ligne de transport entre les deux zones de réaction. Ainsi, un échangeur de chaleur E1 peut-être disposé sur la première ligne de transport entre la zone de réduction de 210 et la zone d'oxydation 200, et est traversé par tout le flux de particules de masse active provenant de la zone de réduction 210. Selon une autre configuration, un échangeur de chaleur E2 est placé sur la deuxième ligne de transport entre la zone d'oxydation 200 et la zone de réduction 210, et est traversé de la même manière par tout le flux de particules de masse active provenant de la zone d'oxydation 200. Selon l'invention, chacune des deux lignes de transport peut comporter un échangeur de chaleur. Plusieurs échangeurs de chaleur peuvent également être disposés sur une même ligne de transport.

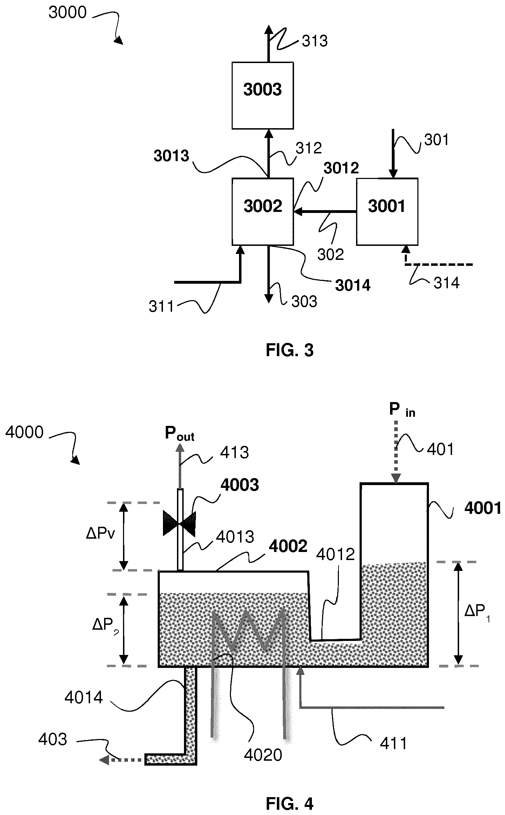

L'échangeur de chaleur et son fonctionnement sont détaillés plus bas en relation avec la figure 3. L'échangeur de chaleur est associé à une zone réservoir (non représentée), située sur le circuit des particules de la boucle chimique formée entre la zone de réduction 210 et la zone d'oxydation 200, pour former un dispositif de contrôle d'échange de chaleur. La zone réservoir est également détaillée plus bas en relation avec la figure 3.

Dans le procédé CLC selon l'invention, la charge hydrocarbonée 13 est envoyée dans la zone de réduction 210 et est mise en contact avec une masse active oxydo-réductrice sous forme de particules introduite par une conduite 16 de la deuxième ligne de transport.

La masse active $M_xO_y$, M représentant un métal, est réduit à l'état $M_xO_{y-2n-m/2}$, par l'intermédiaire de la charge hydrocarbonée $C_nH_m$, qui est corrélativement oxydée en $CO_2$ et $H_2O$, selon la réaction (1) ci-dessous, ou éventuellement en mélange $CO + H_2$ selon les proportions utilisées.

$$C_nH_m + M_xO_y \rightarrow n\, CO_2 + m/2\, H_2O + M_xO_{y-2n-m/2} \qquad (1)$$

La combustion de la charge au contact de la masse active est réalisée à une température généralement comprise entre 600°C et 1400°C, préférentiellement entre 800°C et 1000°C. Le temps de contact varie selon le type de charge combustible utilisé. Il varie typiquement entre 1 secondes et 10 minutes, par exemple de préférence entre 1 et 5 minutes pour une charge solide ou liquide, et par exemple de préférence de 1 à 20 secondes pour une charge gazeuse. Le ratio massique entre la quantité de masse active en circulation et la quantité d'oxygène à transférer entre les deux zones réactionnelles est avantageusement compris entre 30 et 100, de préférence entre 40 et 70.

Un mélange comprenant les gaz issus de la combustion et les particules de la masse active est évacué au sommet de la zone de réduction 210. Des moyens de séparation de gaz/solide (non représentés), tels qu'un cyclone, permettent de séparer les gaz de combustion 14 des particules solides de la masse active. Ces dernières sont envoyées dans un échangeur de chaleur E1 permettant de récupérer la chaleur des particules solides de la masse active, puis sont envoyées par une conduite 18 vers la zone d'oxydation 200 pour être oxydées, au moins en partie, à une température généralement comprise entre 600°C et 1400°C, préférentiellement entre 800 et 1000°C.

Dans le réacteur d'oxydation 200, la masse active est restaurée à son état oxydé MxOy au contact d'un gaz oxydant,11 tel que de l'air, selon la réaction (2) ci-dessous, avant de retourner vers la zone de réduction 210 par l'intermédiaire d'une deuxième ligne de transport (15,16), après avoir été séparée du gaz oxydant appauvri en oxygène 12 évacué au sommet de la zone d'oxydation 200.

$$M_xO_{y-2n-m/2} + (n+m/4)\, O_2 \rightarrow M_xO_y \qquad (2)$$

La masse active, passant alternativement de sa forme oxydée à sa forme réduite et inversement, décrit un cycle d'oxydo-réduction.

Un échangeur de chaleur E2 peut être positionné sur cette deuxième ligne de transport, selon une configuration alternative à celle avec l'échangeur de chaleur E1.

Il peut être avantageux de disposer un ou plusieurs échangeurs de chaleur sur l'une et l'autre des lignes de transport entre les zones réactionnelles, selon la répartition entre les chaleurs de réduction et d'oxydation dans le procédé. Cette répartition dépend fortement des masses actives (notamment oxydes métalliques) utilisées pour conduire la combustion par boucle chimique. Dans certains cas, l'exothermicité est répartie entre l'oxydation et la réduction de la masse active. Dans d'autres cas, l'oxydation est fortement exothermique et la réduction est endothermique. Dans tous les cas, la somme des chaleurs de réaction dans les zones d'oxydation et de réduction est égale à la chaleur de combustion du combustible.

De préférence, l'échange de chaleur est réalisé dans au moins un échangeur de chaleur E1 placé sur la première ligne de transport reliant la zone de réduction 210 à la zone d'oxydation 200. Il est en effet plus fréquent que l'oxydation de la masse active soit exothermique. Dans ce cas, afin d'éviter une trop forte montée en température dans la zone d'oxydation 200, il est avantageux d'effectuer l'échange de chaleur en amont de cette zone d'oxydation.

Dans le procédé selon l'invention, il est possible de contrôler l'échange de chaleur avec la masse active en modifiant la quantité de masse active au sein de l'échangeur de chaleur par le contrôle du bilan pression d'un dispositif comprenant l'échangeur de chaleur et une zone réservoir, et plus précisément par le contrôle des pertes de charges dans ce dispositif.

Contrôle de l'échange de chaleur selon l'invention

La figure 3 illustre schématiquement le principe de fonctionnement du dispositif de contrôle de l'échange de chaleur dans le procédé CLC selon l'invention.

Le dispositif de contrôle d'échange de chaleur 3000 comprend :

- un échangeur de chaleur 3002 opérant en lit fluidisé, positionné sur une ligne de transport comme décrit précédemment, recevant le flux de particules de la masse active en provenance d'une zone réactionnelle, et
- une zone de réservoir de la masse active 3001, aussi appelée zone réservoir dans le reste de la description.

L'échangeur de chaleur 3002 comprend une surface d'échange de chaleur, non représentée dans la figure 3, pour récupérer la chaleur d'un lit fluidisé de particules de la masse active avec lequel elle est en contact. Cette surface d'échange de chaleur peut être matérialisée par des faisceaux de tubes dans lesquels circule un fluide caloporteur, pouvant être fixés sur les parois d'une enceinte formant l'échangeur de chaleur. Un tel dispositif de faisceaux de tubes est bien connu de l'homme du métier. L'échangeur de chaleur peut être utilisé indifféremment pour chauffer ou refroidir le lit fluidisé. Le fluide caloporteur est de préférence de l'eau, par exemple de l'eau pressurisée issue d'une chaudière. L'eau peut être soit réchauffée, soit au moins partiellement vaporisée, soit surchauffée dans les faisceaux de tubes.

L'échangeur de chaleur 3002 comprend également :

- une entrée 3012 pour le flux entrant de particules de la masse active 302;
- des moyens d'injection d'un gaz de fluidisation 311 pour former un lit fluidisé de particules de la masse active ;
- une évacuation 3013 du gaz de fluidisation sortant 312 située dans une partie supérieure de l'échangeur de chaleur, ladite évacuation comprenant des moyens d'application contrôlée d'une perte de charge 3003;
- une sortie 3014 pour un flux sortant de particules de la masse active 303 située dans une partie inférieure de l'échangeur de chaleur.

Un lit circulant de masse active 302 ayant transité dans une zone réservoir 3001 est introduit dans l'échangeur de chaleur 3002. La température du lit est par exemple de 800°C. L'échangeur de chaleur 3002 opère en lit fluidisé. La fluidisation des particules de la masse active introduites dans l'échangeur 3002 est assurée par l'injection du gaz de fluidisation 311.

Le lit fluidisé crée dans l'échangeur de chaleur est un lit fluidisé dense, favorisant les échanges thermiques. On se réfère à un lit fluidisé dense par opposition à un lit fluidisé dilué en ce sens qu'il se comporte comme un liquide (dense) plutôt que comme un gaz lorsqu'il est transporté de manière pneumatique.

Par lit fluidisé dense, on entend un lit fluidisé dans lequel la fraction de gaz $\varepsilon_g$ est inférieure à 0,9, de préférence inférieure à 0,8. Par lit fluidisé dilué, on entend un lit fluidisé dans lequel la fraction volumique des particules de la masse active oxydo-réductrice est inférieure à 10% en volume.

La nature du gaz de fluidisation est choisie de manière à être compatible avec le procédé. On utilise par exemple de la vapeur d'eau surchauffée, de l'air ou du $CO_2$.

Cette notion de compatibilité est importante dans le cadre d'un procédé CLC dans la mesure où l'on recherche à avoir le plus d'étanchéité possible entre les zones d'oxydation et de réduction, afin d'une part de garantir le meilleur taux de captage qui soit, et d'autre part de garantir la plus grande qualité possible pour le $CO_2$ capté. Par ailleurs, cette notion de compatibilité est également importante relativement aux normes de sécurité en vigueur qui doivent être respectées, afin de prévenir, par exemple, tout risque de mélange comburant-carburant par l'introduction d'un gaz de fluidisation inadapté (comme de l'air) au contact d'une zone de combustion d'hydrocarbure et en l'absence de dispositifs d'étanchéité tels que des siphons.

Ainsi, on utilise de préférence de l'air ou de la vapeur d'eau en tant que gaz de fluidisation dans l'échangeur de chaleur, lorsque ce dernier est situé sur une ligne de transport dirigée vers la zone d'oxydation ne comportant pas d'élément d'étanchéité tel qu'un siphon. On utilise de préférence du $CO_2$, de la vapeur d'eau, un mélange des deux ou des fumées de combustion en tant que gaz de fluidisation dans l'échangeur de chaleur, lorsque ce dernier est situé sur une ligne de transport dirigée vers la zone de réduction ne comportant pas d'élément d'étanchéité tel qu'un siphon.

L'utilisation de gaz neutres tels que l'azote est possible tant que cela n'impacte pas la qualité du $CO_2$ produit, par exemple en veillant à implanter des dispositifs d'étanchéité. En l'absence de ces dispositifs d'étanchéité, il est préférable de ne recourir aux gaz neutres que lorsque l'échangeur de chaleur est situé sur une ligne de transport dirigée vers la zone d'oxydation, ou qu'en se limitant à de faibles quantités lorsque l'échangeur de chaleur est situé sur une ligne de transport dirigée vers la zone de réduction, afin de respecter les normes d'incondensables dans le flux de $CO_2$ produit pour son transport et/ou son stockage, typiquement moins de 5 % mol.

Dans certains cas, l'injection du gaz de fluidisation peut être réalisée sous forme d'injections multiples (non représentées).

Avantageusement, l'échangeur de chaleur 3002 peut être le siège de réactions entre la masse active et des réactifs gazeux, le temps de réaction pouvant alors être ajusté par le niveau du solide, i.e. la hauteur de solide traversée par le gaz. Dans ce cas, le gaz de fluidisation peut comprendre un gaz vecteur, des réactifs gazeux ou un mélange des deux.

Le gaz de fluidisation, après avoir fluidisé les particules de masse active, et éventuellement réagi avec elles, sort de l'échangeur de chaleur sous forme d'un effluent gazeux 312.

Les particules de masse active 303 sont évacuées de l'échangeur de chaleur 3002, par exemple à une température 700°C. L'extraction du lit de l'échangeur de chaleur peut se faire par tout moyen connu de l'homme du métier en accord avec le fonctionnement du procédé CLC.

Le niveau du lit fluidisé de particules de la masse active peut varier dans l'échangeur de chaleur, provoquant une modification de la surface d'échange de chaleur effective en contact avec le lit, c'est-à-dire la fraction de la surface d'échange immergée dans le lit fluidisé, ce qui permet de moduler la quantité de chaleur échangée. Cette variation de la hauteur du lit est réalisée par des moyens d'application contrôlée d'une perte de charge 3003 au niveau de l'évacuation du gaz de fluidisation 3013, tel qu'au moyen d'une vanne positionnée sur l'évacuation du gaz de fluidisation.

On applique une perte de charge à l'effluent gazeux 312 sortant de l'échangeur (gaz de fluidisation sortant). Il en résulte un effluent gazeux 313 à basse pression.

La variation de l'ouverture de la vanne permet l'application contrôlée d'une perte de charge à cet endroit. Le principe du contrôle du niveau du lit fluidisé dans l'échangeur de chaleur est basée sur le bilan pression (I) dans le dispositif de contrôle de l'échange de chaleur (échangeur de chaleur + zone réservoir) :

$$Pin + \Delta P1 = \Delta P2 + \Delta Pv + Pout \qquad (I)$$

Avec :

Pin : pression à l'entrée solide
$\Delta$P1 : perte de charge de la zone réservoir
$\Delta$P2 : perte de charge de l'échangeur de chaleur
$\Delta$Pv : perte de charge de la vanne
Pout : pression à la sortie gaz de l'échangeur de chaleur

Le niveau du lit peut donc être calculé par la relation (II) suivante :

$$Hlit = (Pin + \Delta P1 - \Delta Pv - Pout)/(\rho bulk . g) \qquad (II)$$

Hlit : niveau (hauteur) du lit
pbulk : densité apparente du lit
g : constante de gravité

La hauteur du lit fluidisé dépend de la température du lit, de la vitesse superficielle du gaz dans l'échangeur de chaleur, de la densité et de la taille des particules de la masse active. La variation de la quantité de solide amenée dans l'échangeur de chaleur suite à l'application contrôlée de la perte de charge permet de faire varier la hauteur du lit fluidisé, tous les autres paramètres étant par ailleurs constants.

Un élément important dans ce fonctionnement est la gestion de l'inventaire total, c'est-à-dire de la quantité de masse active dans l'installation CLC à un moment donné. Le contrôle de l'échange de chaleur selon l'invention est basé sur le concept du siphon, selon lequel l'augmentation de la perte de charge dans l'échangeur de chaleur est absorbée par la variation du niveau solide dans la zone réservoir. Cela donne un degré de liberté supplémentaire dans le cas où cette zone réservoir et l'échangeur de chaleur forment un même ensemble situé à un endroit donné de l'installation CLC, permettant d'éviter de changer les conditions opératoires ailleurs dans l'unité CLC pendant la variation de l'inventaire solide dans le dispositif de contrôle de l'échange de chaleur.

Selon l'invention la répartition de solide dans le dispositif de contrôle d'échange de chaleur est ajustée automatiquement en fonction de la perte de charge imposée, de la même manière que dans un siphon (loop-seal en termes anglo-saxons). Ce principe est bien décrit par Yazdanpanah et al., 2013 ("An experimental investigation of loop-seal operation in an interconnected circulating fluidized bed system", Powder Technology, Volume 237, March 2013, Pages 266-275, ISSN 0032-5910).

La perte de charge appliquée au niveau de la vanne est compensée par la variation du niveau d'un lit de particules de la masse active dans la zone réservoir 3001.

Cette zone 3001 constitue un réservoir de masse active situé à un endroit donné sur le circuit des particules de la boucle chimique formée entre la zone de réduction et la zone d'oxydation, par exemple en amont de l'échangeur de chaleur et en aval de la zone réactionnelle d'où proviennent les particules. La zone réservoir 3001 peut être un lit fluidisé ou un lit fixe mobile selon les propriétés des particules utilisées et le design de l'installation. La zone réservoir peut être une capacité existante de l'installation CLC. La zone réservoir reçoit un flux de particules 301 à une pression Pin. La zone réservoir peut disposer d'une fluidisation dédiée 314, par exemple dans le cas où elle comprend un lit fluidisé de particules de la masse active.

Cette zone réservoir peut être par exemple la jambe d'entrée du solide dans l'échangeur de chaleur.

Les moyens d'application contrôlée d'une perte de charge 3003 peuvent comprendre une vanne mécanique, rotative ou linéaire, et de préférence reliée à l'automate de régulation du procédé afin de pouvoir piloter son ouverture/fermeture. A titre d'exemple non limitatif on peut employer une vanne papillon.

Un avantage majeur à l'utilisation de telles vannes mécaniques est la précision atteinte. Ce type de vannes permet en effet une régulation fine (par exemple + /- 5 microns) et des temps de réponse courts (instantané à quelques secondes).

Selon un mode de réalisation, les moyens d'application contrôlée d'une perte de charge 3003 sont déportés hors de l'échangeur de chaleur 3002, de telle sorte que l'on puisse contrôler la température desdits moyens par convection naturelle avec l'air ambiant, ou par application d'un refroidissement dédié aux moyens 3003 tel qu'une circulation d'eau de refroidissement. Un avantage à cette configuration est que ce refroidissement n'a pas d'impact sensible sur la température du lit fluidisé.

L'échangeur de chaleur 3002 peut être le siège de réactions entre la masse active et des réactifs gazeux, comme décrit plus haut, par exemple le lieu d'une réaction d'oxydation de la masse active en contact avec de la vapeur d'eau, dont il pourrait résulter la production de dihydrogène selon la nature de la masse active, par exemple dans le cas d'une forme réduite d'oxyde de fer. Par ailleurs, il est éventuellement possible d'exploiter un effet CLOU (« Chemical Looping with Oxygen Uncoupling »), c'est-à-dire un effet de relargage spontané d'oxygène gazeux par la masse active oxydo-réductrice lorsqu'elle est placée à basse pression partielle d'$O_2$, dans le cas où l'échangeur de chaleur est situé en aval de la zone d'oxydation 200, sur une ligne de transport de la zone d'oxydation 200 vers la zone de réduction 210. En effet, le temps de séjour de la masse active issue de la zone d'oxydation dans l'échangeur de chaleur peut permettre l'apparition de cet effet, selon la masse active utilisée, et ainsi d'utiliser l'oxygène gazeux dans la zone de réduction pour la combustion de la charge.

L'échangeur de chaleur 3002 ou la zone réservoir 3001 peuvent également avoir d'autres fonctions que celles respectivement de l'échange de chaleur ou de zone tampon, et peuvent par exemple comprendre une zone d'élutriation, visant à séparer des particules fines et légères de particules plus grosses et/ou plus denses, comme cela peut être utile, sans être exhaustif, dans le cas de la combustion de charges hydrocarbonées solides générant des cendres et/ou des imbrulés solides ou pour limiter la proportion de fines issues de l'attrition de la masse active. Cela a pour avantage de limiter le nombre d'éléments dans l'installation, et donc simplifier l'installation et réduire les coûts. Le principe de la séparation par élutriation est de soumettre un lit fluidisé constitué d'un mélange de particules fines et légères et de particules plus grosses et/ou plus denses à un flux de gaz dont la vitesse est ajustée de telle sorte que les particules les plus fines et légères soient entraînées hors du lit fluidisé par le gaz vecteur, par discrimination des vitesses terminales de chute des particules.

L'échangeur de chaleur 3002 est adapté à une telle séparation, la régulation du niveau du lit fluidisé étant décorrélée de la vitesse du gaz de fluidisation dont la vitesse peut ainsi être adaptée à l'élutriation d'une population de solide particulière.

Dans le cas où l'échangeur de chaleur 3002 fait également office de zone d'élutriation, les particules solides les plus fines et légères peuvent être évacuées par l'évacuation du gaz de fluidisation 3013. Le flux de gaz sortant comporte alors une petite quantité de particules solides, n'affectant pas le fonctionnement du contrôle de l'échange de chaleur selon l'invention. La fraction de gaz $\varepsilon_g$ du mélange gazeux sortant par l'évacuation 3013 est de préférence supérieure à 0,90, plus préférentiellement supérieure à 0,98.

La zone réservoir 3001 peut être également un dispositif d'élutriation positionné sur le circuit des particules dans la boucle chimique.

La présente invention permet de contrôler l'échange de chaleur avec la masse active dans le procédé, ce qui permet un contrôle de la température par le biais des particules de la masse active dans les zones réactionnelles de réduction et d'oxydation. Selon l'invention, il est notamment possible de contrôler la température dans le procédé CLC, sans modifier l'inventaire de masse active oxyde réductrice dans le procédé.

Il est ainsi possible de contrôler par exemple la température dans les zones de réduction et d'oxydation en évacuant la chaleur produite par la combustion globale du combustible (somme des chaleurs d'oxydation et de réduction).

L'invention permet par exemple de réguler la température en réponse à des modifications opératoires du procédé tel qu'une augmentation de l'injection de la charge hydrocarbonée, qui nécessite de récupérer plus de chaleur pour maintenir les conditions de température optimale pour la combustion.

Il est à noter qu'en général la chaleur est extraite de la masse active de manière à refroidir celle-ci. Dans certains cas, il peut être avantageux d'apporter de la chaleur aux particules de la masse active, par exemple dans le cas où celle-ci ai besoin d'être à nouveau activée par une montée en température, afin de pouvoir augmenter ses capacités réactives.

La présente invention présente notamment les avantages suivants :

- Le contrôle de l'échange de chaleur selon l'invention permet de s'affranchir de l'utilisation de vannes mécaniques ou pneumatiques sur le flux de particules de la masse active pour faire varier le niveau du lit fluidisé dans l'échangeur de chaleur, ou de manière plus générale pour contrôler les échanges de chaleur dans un échangeur de chaleur, sachant que de telles vannes sont des éléments particulièrement sensibles à l'érosion par les particules et sont complexes à mettre en œuvre sur des flux de solide.
- le contrôle de l'échange de chaleur selon l'invention permet à la totalité du débit de particules de masse active de passer via l'échangeur de chaleur, sans requérir l'utilisation de systèmes de by-pass, ce qui permet de simplifier l'installation CLC et de réduire les coûts opératoires et d'investissements.
- le contrôle la perte de charge dans une phase gaz, au niveau de l'effluent gazeux 312 sortant de l'échangeur de chaleur, a pour avantage d'être simple, fiable, précis et rapide, comparativement au contrôle sur un flux de particules solides.
- le contrôle de l'échange de chaleur est très efficace, notamment car la variation de niveau du lit fluidisé de particules dans l'échangeur de chaleur fait varier la surface d'échange de chaleur en contact avec le lit, qui conditionne directement l'échange de chaleur.

Les figures 4 à 6 illustrent différents modes de réalisation du dispositif de contrôle d'échange de chaleur, en particulier différents modes de réalisation dans lesquels la zone réservoir est physiquement associée à l'échangeur de chaleur pour former un seul ensemble implanté sur une sur une ligne de transport des particules entre la zone de réduction et la zone d'oxydation. Ces configurations permettent d'éviter la variation de l'inventaire de masse active dans les autres parties de l'installation CLC.

Selon un premier mode de réalisation de l'invention, ainsi qu'illustré schématiquement à la figure 4, le dispositif de contrôle d'échange de chaleur 4000 comprend un échangeur de chaleur 4002, tel que généralement décrit à la figure 3, et une conduite 4001 formant la zone réservoir, ladite conduite débouchant dans le lit fluidisé de l'échangeur 4002. La conduite 4001 débouche dans la partie basse de l'échangeur 4002, immergée en permanence dans le lit fluidisé de particules de la masse active.

La conduite 4001 est par exemple la jambe d'entrée des particules solides de masse active dans l'échangeur de chaleur.

La conduite 4001 peut être formée par une portion de canalisation sensiblement verticale et par une portion de canalisation sensiblement horizontale 4012, les deux portions étant reliées par un coude. La portion de canalisation sensiblement horizontale 4012 débouche dans la partie basse de l'échangeur 4002, et peut avoir un même niveau de référence que celui de l'échangeur de chaleur, constitué par le fond de l'échangeur de chaleur.

Le lit de particules dans la zone réservoir est de préférence un lit de particules mobile, se déplaçant par effet gravitaire. Ce peut également être un lit fluidisé. Dans ce cas la zone réservoir peut comporter des moyens de fluidisation (non représentés) permettant de faciliter l'écoulement du lit de particules vers l'échangeur de chaleur.

L'échangeur de chaleur 4002 comprend :

- une entrée 4012 pour un flux entrant de particules de la masse active ;
- des moyens d'injection d'un gaz de fluidisation 411 pour former un lit fluidisé de particules de la masse active ;
- une évacuation du gaz de fluidisation 4013 située dans une partie supérieure de l'échangeur de chaleur 4002, ladite évacuation comprenant une vanne 4003 pour l'application contrôlée d'une perte de charge;

- une sortie pour les particules de la masse active 4014 située dans une partie inférieure de l'échangeur de chaleur 4002 ; et
- une surface d'échange de chaleur 4020 pour récupérer la chaleur du lit fluidisé de particules.

Selon ce premier mode de réalisation, on envoie les particules de la masse active 401 dans l'échangeur de chaleur 4002 par la conduite 4001, à une pression d'entrée des particules donnée $P_{in}$. On applique alors de manière contrôlée une perte de charge $\Delta P_V$ par la vanne 4003 située sur la sortie du gaz de fluidisation 4013, qui est située à l'extérieur de l'échangeur de chaleur 4002, pour former un effluent gazeux 413 à basse pression $P_{out}$. La perte de charge $\Delta P_2$ appliquée dans la zone d'échange de chaleur 4002 est compensée par une variation du niveau du lit de particules $\Delta P_1$ dans la zone réservoir 4001, de manière à satisfaire le bilan pression selon l'équation (I). Les particules de la masse active 403 sont évacuées par la conduite de sortie 4014 située dans la partie basse de l'échangeur de chaleur 4002.

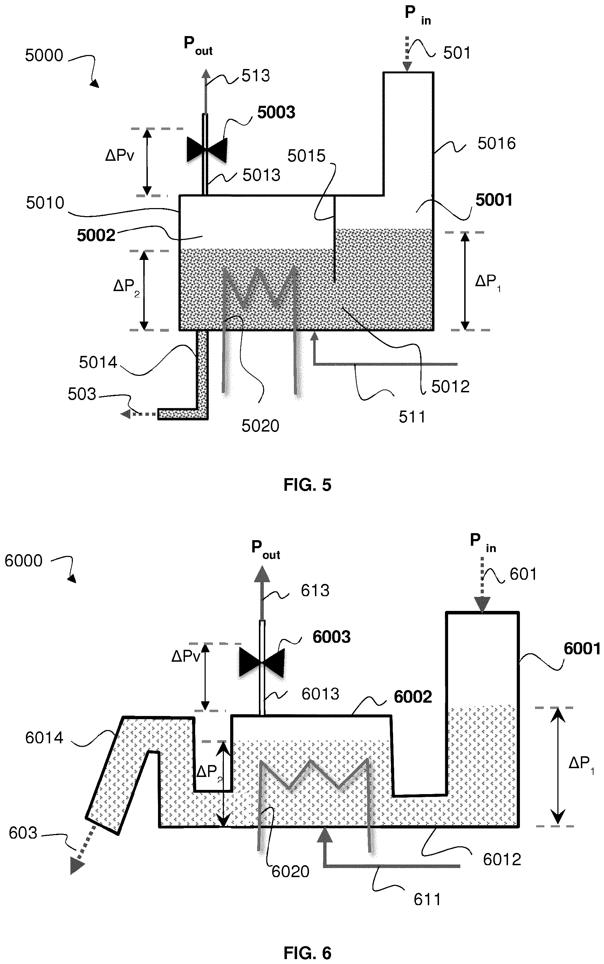

La figure 5 illustre, de manière schématique, une second mode de réalisation du dispositif de contrôle d'échange de chaleur 5000, dans lequel l'échangeur de chaleur 5002 et la zone réservoir 5001 sont formés par une enceinte unique 5010 munie d'une paroi 5015 séparant verticalement ladite enceinte 5010 en une première partie constituant la zone réservoir 5001 en amont d'une deuxième partie constituant l'échangeur de chaleur 5002.

La paroi de séparation 5015 comporte un passage 5012 pour le lit de particules de la masse active de la zone réservoir 5001 vers l'échangeur de chaleur 5002. L'échangeur de chaleur 5002 comprend des moyens d'injection d'un gaz de fluidisation 511 pour former un lit fluidisé de particules de la masse active dans l'échangeur de chaleur. De préférence, la zone réservoir 5001 opère en lit fluidisé comme l'échangeur de chaleur 5002, et comprend ainsi de préférence des moyens d'injection d'un gaz de fluidisation (non représentés). Le gaz de fluidisation est de même nature que celui utilisé pour l'échangeur de chaleur et décrit plus haut en relation avec la figure 3.

L'entrée des particules de la masse active dans le dispositif se fait par une conduite 5016 disposée en partie haute de la zone réservoir 5001, et les particules de masse active 503 sont évacuées par une conduite 5014 dans la partie basse de l'échangeur de chaleur 5002.

Selon ce deuxième mode de réalisation, on envoie les particules de la masse active 501 dans la zone réservoir 5001 par la conduite 5016, à une pression d'entrée des particules donnée $P_{in}$. On applique alors de manière contrôlée une perte de charge $\Delta P_V$ par la vanne 5003 située sur la sortie du gaz de fluidisation 5013 dans une partie supérieure de l'échangeur de chaleur 5002, plus précisément à l'extérieur de l'échangeur de chaleur 5002, pour former un effluent gazeux 513 à basse pression $P_{out}$. La perte de charge $\Delta P_2$ appliquée dans la zone d'échange de chaleur 5002 est compensée par une variation du niveau du lit de particules $\Delta P_1$ dans la zone réservoir 5001, de manière à satisfaire le bilan pression selon l'équation (I). Les particules de la masse active 503 sont évacuées par la conduite de sortie 5014.

Le niveau du lit fluidisé dans l'échangeur de chaleur 5002 peut ainsi varier en fonction de la perte de charge appliquée par la vanne 5003, permettant ainsi de faire varier la surface d'échange de chaleur 5020 effectivement en contact avec le lit fluidisé de particules, afin de contrôler la récupération de chaleur dans l'échangeur 5002.

La figure 6 illustre schématiquement une troisième mode de réalisation, dans lequel le dispositif de contrôle de l'échange de chaleur 6000 comprend un échangeur de chaleur 6002 et une zone réservoir 6001 semblables à ce qui a été décrit en relation avec la figure 4, excepté pour ce qui est de la sortie du flux de particules de masse active 603 de l'échangeur de chaleur 6002. Les éléments identiques à l'échangeur de chaleur et à la zone réservoir de la figure 4 ne sont pas repris ici.

Selon ce mode de réalisation, la sortie 6014 du flux de particules est une conduite ayant une forme similaire à un siphon. Dans ce cas, le niveau du lit fluidisé dans l'échangeur de chaleur 6002 est en équilibre avec la pression à la sortie 6014 du flux de particules 603 comme dans le fonctionnement d'un siphon. Ce mode de réalisation permet avantageusement de combiner la facilité d'opération d'un échangeur à débordement avec le contrôle du niveau de lit dans l'échangeur tel que décrit.

Selon ce mode de réalisation, on envoie les particules de la masse active 601 dans l'échangeur de chaleur 6002 par la conduite 6001, à une pression d'entrée des particules donnée $P_{in}$. On applique alors de manière contrôlée une perte de charge $\Delta P_V$ par la vanne 6003 située sur la sortie du gaz de fluidisation 6013 dans une partie supérieure de l'échangeur de chaleur 6002, en particulier située à l'extérieur de l'échangeur de chaleur 6002, pour former un effluent gazeux 613 à basse pression $P_{out}$. La perte de charge $\Delta P_2$ appliquée dans la zone d'échange de chaleur 6002 est compensée par une variation du niveau du lit de particules $\Delta P_1$ dans la zone réservoir 6001, de manière à satisfaire le bilan pression selon l'équation (I). Les particules de la masse active 603 sont évacuées par la conduite de sortie 6014 en forme de siphon située dans la partie basse de l'échangeur de chaleur 6002.

Le niveau du lit fluidisé dans l'échangeur de chaleur 6002 peut ainsi varier en fonction de la perte de charge appliquée par la vanne 6003, permettant ainsi de faire varier la surface d'échange de chaleur 6020 effectivement en contact avec le lit fluidisé de particules, afin de contrôler la récupération de chaleur dans l'échangeur 6002.

Selon une variante de ce troisième mode de réalisation, l'échangeur de chaleur 6002 ainsi que la partie réservoir 6001 peuvent être semblables à ceux décrits en relation avec la figure 5.

Applications du procédé CLC selon l'invention

Dans le procédé, la combustion peut être partielle ou totale.

Dans le cas de la combustion partielle, le ratio masse active/charge hydrocarbonée est ajusté de manière à réaliser l'oxydation partielle de la charge hydrocarbonée, produisant un gaz de synthèse sous forme d'un mélange riche en $CO + H_2$. Le procédé peut donc être utilisé pour la production de gaz de synthèse. Ce gaz de synthèse peut être utilisé comme charge d'autres procédés de transformation chimique, par exemple le procédé Fischer Tropsch permettant de produire à partir de gaz de synthèse des hydrocarbures liquides à chaînes hydrocarbonées longues utilisables ensuite comme bases carburants.

Dans le cas où le gaz de fluidisation utilisé dans la zone de réduction (réacteur de combustion) est la vapeur d'eau ou un mélange de vapeur d'eau et d'autre(s) gaz, la réaction du gaz CO à l'eau (ou water gas shift en termes anglo-saxons, $CO + H_2O \rightarrow CO_2 + H_2$) peut également avoir lieu, aboutissant à la production d'un mélange $CO_2 + H_2$ en sortie de la zone de réduction, qui peut être utilisé à des fins de production d'énergie compte tenu de son pouvoir calorifique, ou pour la production d'hydrogène, et par exemple alimenter des unités d'hydrogénation, d'hydrotraitement en raffinage ou un réseau de distribution d'hydrogène (après réaction de water gaz shift).

Dans le cas de la combustion totale, le flux de gaz en sortie de la zone de réduction est composé essentiellement de $CO_2$ et de vapeur d'eau. Un flux de $CO_2$ prêt à être séquestré peut être ensuite obtenu par condensation de la vapeur d'eau. La production d'énergie est intégrée au procédé CLC par échange de chaleur comme décrit ici, mais également par échange de chaleur possible sur les fumées qui sont refroidies.

L'invention concerne donc également un procédé de captage du $CO_2$ par combustion totale en boucle chimique dans un procédé selon l'invention.

**Exemple**

L'exemple suivant permet d'illustrer l'invention en s'appuyant sur la simulation du fonctionnement d'un dispositif de contrôle d'échange de chaleur tel que décrit en relation avec la figure 3, et basée sur l'utilisation de particules de sable en tant qu'analogue de particules d'une masse active oxydo-réductrice.

On considère un échangeur de chaleur 3002 contenant un lit fluidisé de sable d'une densité particulaire de $2650 \text{ kg/m}^3$, dont le diamètre moyen des particules est de $250 \mu m$. Cet échangeur de chaleur est alimenté et vidangé de telle façon que tant qu'il n'y a pas de variation de la perte de charge par les moyens d'application contrôlés d'une parte de charge 3003, le niveau du lit reste constant. Cet échangeur 3002 est fluidisé à la vapeur d'eau surchauffée de manière à ce que la vitesse superficielle du gaz dans l'échangeur 3002 soit de 3 à 6 fois la vitesse minimale de fluidisation $u_{mf}$ du sable. Dans les conditions de cet exemple, la vitesse minimale de fluidisation des particules de sable $u_{mf}$ est égale à 0,06 m/s, soit une vitesse de fluidisation dans le lit de 0,24 m/s. Cela crée des conditions de fluidisation en lit dense favorables à l'échange thermique.

L'échangeur de chaleur a une hauteur de 2 mètres. Les variations de niveau du lit fluidisé dans l'échangeur de chaleur exposées ci-après se réfèrent à une variation par rapport au niveau bas du lit, c'est-à-dire le niveau minimal permettant d'assurer une circulation satisfaisante du solide à travers l'équipement et sa fluidisation.

Le tableau 1 suivant indique la fraction immergée (en contact avec le lit fluidisé) de la surface totale d'échange de chaleur (faisceaux de tubes) en fonction de la perte de charge appliquée par les moyens d'application contrôlés d'une parte de charge 3003.

Tableau 1

| Perte de charge appliquée sur la sortie gaz $\Delta Pv$ | Variation du niveau du lit dans l'échangeur | Surface d'échange de chaleur immergée | Echange de chaleur | Niveau du lit H_reservoir |
|---|---|---|---|---|
| (mbar) | (m) | (% surface totale) | (%Q_max) | (m) |
| 0 | 2.0 | 100% | 100% | 8 |
| 50 | 1.6 | 81% | 81% | 6 |
| 100 | 1.2 | 62% | 62% | 5 |
| 150 | 0.8 | 42% | 42% | 3 |
| 200 | 0.5 | 23% | 23% | 2 |
| 260 | 0.0 | 0% | 0% | 0 |

Le dispositif de contrôle d'échange de chaleur exemplifié permet ainsi de moduler l'échange de chaleur entre 0 et 100% entre un lit de solide et un fluide caloporteur sans modifier le flux de solide ou de fluide caloporteur.

## Revendications

1. Procédé de combustion d'une charge hydrocarbonée (13) par oxydo-réduction en boucle chimique dans laquelle une masse active oxydo-réductrice sous forme de particules circule entre une zone d'oxydation (200) et une zone de réduction (210) pour former un circuit, dans lequel :

   - on réalise la combustion de ladite charge hydrocarbonée (13) par mise en contact avec les particules de la masse active oxydo-réductrice dans la zone de réduction (210) ;
   - on oxyde les particules de la masse active oxydo-réductrice issues de la zone de réduction (210) par mise en contact avec un flux de gaz oxydant (11) dans la zone d'oxydation (200) ;
   - on envoie les particules dans au moins un échangeur de chaleur (E1, E2, 3002, 4002, 5002, 6002) positionné sur une ligne de transport des particules (15, 16, 17, 18) entre la zone de réduction (210) et la zone d'oxydation (200), et on envoie un gaz de fluidisation (311, 411, 511, 611) dans ledit échangeur pour créer un lit fluidisé dense comprenant les particules de la masse active, ledit échangeur de chaleur comportant une surface d'échange de chaleur (4020, 5020, 6020) en contact avec le lit fluidisé ;

   **caractérisé en ce qu'**on contrôle la récupération de chaleur dans ledit au moins un échangeur de chaleur (E1, E2, 3002, 4002, 5002, 6002) en faisant varier le niveau du lit fluidisé par l'application contrôlée d'une perte de charge sur une évacuation du gaz de fluidisation (3013, 4013, 5013, 6013) positionnée dans une partie supérieure de l'échangeur de chaleur, la perte de charge appliquée étant compensée par la variation du niveau d'un lit de particules de la masse active dans une zone réservoir (3001, 4001, 5001, 6001) située sur le circuit des particules dans la boucle chimique.

2. Procédé selon la revendication 1, dans lequel :

   - on envoie les particules de la masse active dans la zone réservoir (5001) situé en amont de l'échangeur de chaleur (5002), ladite zone réservoir et ledit échangeur de chaleur étant compris dans une enceinte unique (5010) munie d'une paroi (5015) séparant verticalement l'enceinte en une première partie formant la zone réservoir (5001) et une deuxième partie formant l'échangeur de chaleur (5002),
   - on compense la perte de charge appliquée dans l'échangeur de chaleur (5002) par une variation du niveau du lit de particules, de préférence fluidisé, dans la zone réservoir (5001) communiquant avec le lit fluidisé de l'échangeur de chaleur par un passage (5012) dans la paroi (5015) de l'enceinte (5010).

3. Procédé selon la revendication 1, dans lequel on envoie les particules de la masse active dans l'échangeur de chaleur (4002, 6002) par une jambe d'entrée de l'échangeur de chaleur, ladite jambe d'entrée formant la zone réservoir (4001, 6001).

4. Procédé selon l'une des revendications précédentes, dans lequel on évacue les particules de la masse active de l'échangeur de chaleur (6002) par une conduite (6014) située dans la partie inférieure de l'échangeur de de chaleur, ladite conduite (6014) ayant une forme de siphon.

5. Procédé selon l'une des revendications 1 à 4, dans lequel on contrôle l'ouverture d'une vanne mécanique positionnée sur l'évacuation du gaz de fluidisation de l'échangeur de chaleur pour l'application contrôlée de la perte de charge.

6. Procédé selon l'une des revendications 1 à 5, dans lequel on contrôle la température des moyens d'application contrôlée d'une perte de charge (3003, 4003, 5003, 6003) disposés sur l'évacuation du gaz de fluidisation (3013, 4013, 5013, 6013) à l'extérieur dudit échangeur de chaleur (E1, E2, 3002, 4002, 5002, 6002).

7. Procédé selon la revendication 6, dans lequel on refroidit lesdits moyens d'application contrôlée d'une perte de charge (3003, 4003, 5003, 6003) par mise en contact avec un circuit de circulation d'un liquide de refroidissement.

8. Procédé selon l'une des revendications précédentes, dans lequel on réalise l'échange de chaleur sur une ligne de transport (17, 18) acheminant les particules de la masse active de la zone de réduction (210) vers la zone d'oxydation (200).

9. Installation pour réaliser la combustion d'une charge hydrocarbonée (13) par oxydo-réduction en boucle chimique selon l'une des revendications 1 à 8, comprenant :

- une zone de réduction (210) pour la combustion de la charge hydrocarbonée au contact d'une masse active sous forme de particules ;
- une zone d'oxydation (200) pour l'oxydation des particules de la masse active issue de la zone de réduction au contact d'un flux de gaz oxydant (11) ;
- au moins une ligne de transport des particules de la masse active (15, 16, 17, 18) entre la zone de réduction et la zone d'oxydation ;
- un dispositif de contrôle d'échange de chaleur (3000, 4000, 5000, 6000) comprenant un échangeur de chaleur (3002, 4002, 5002, 6002) positionné sur ladite au moins une ligne de transport, l'échangeur de chaleur (3002, 4002, 5002, 6002) comprenant :

une entrée pour un flux entrant de particules de la masse active (3012, 4012, 5012, 6012);
des moyens d'injection d'un gaz de fluidisation (311, 411, 511, 611) pour former un lit fluidisé dense de particules de la masse active ;
une évacuation du gaz de fluidisation sortant (3013, 4013, 5013, 6013) située dans une partie supérieure de l'échangeur de ;
une sortie (3014, 4014, 5014, 6014) pour un flux sortant de particules de la masse active (303, 403, 503, 603) ;
une surface d'échange de chaleur (4020, 5020, 6020) en contact avec le lit fluidisé dense de particules ;

- **caractérisée en ce que**
ladite évacuation du gaz de fluidisation sortant (3013, 4013, 5013, 6013) comprend des moyens d'application contrôlée d'une perte de charge (3003, 4003, 5003, 6003);
- **en ce que** la sortie (3014, 4014, 5014, 6014) pour le flux sortant de particules de la masse active (303, 403, 503, 603) est située dans une partie inférieure de l'échangeur de chaleur ;
- et **en ce que** le dispositif de contrôle d'échange de chaleur (3000, 4000, 5000, 6000) comprend en outre une zone réservoir (3001, 4001, 5001, 6001) pour compenser la perte de charge appliquée sur l'évacuation du gaz de fluidisation de l'échangeur de chaleur, ladite zone réservoir étant située sur le circuit des particules de la boucle chimique formée entre la zone de réduction (210) et la zone d'oxydation (200).

10. Installation selon la revendication 9, dans laquelle l'échangeur de chaleur (5002) et la zone réservoir (5001) sont formés par une enceinte unique (5010) munie d'une paroi (5015) séparant verticalement ladite enceinte en une première partie constituant la zone réservoir (5001) en amont d'une deuxième partie constituant l'échangeur de chaleur (5002), la zone réservoir comprenant de préférence des moyens d'injection d'un gaz de fluidisation, ladite paroi comportant un passage (5012) pour le lit de particules de la masse active de la zone réservoir vers l'échangeur de chaleur, l'entrée des particules se faisant par une conduite (5016) disposée en partie haute de la zone réservoir.

11. Installation selon la revendication 9, dans laquelle l'entrée des particules de la masse active dans l'échangeur de chaleur (4002, 6002) se fait par une jambe d'entrée de l'échangeur de chaleur, ladite jambe d'entrée formant la zone réservoir (4001, 6001).

12. Installation selon l'une des revendications 9 à 11, dans laquelle la sortie pour le flux de particules sortant dans l'échangeur de chaleur (6002) est effectuée dans une conduite (6014) située dans la partie inférieure de l'échangeur de de chaleur (6002), ladite conduite (6014) ayant une forme de siphon.

13. Installation selon l'une des revendications 9 à 12, dans laquelle l'application contrôlée d'une perte de charge est effectuée par une vanne mécanique positionnée sur l'évacuation du gaz de fluidisation (3013, 4013, 5013, 6013) de l'échangeur de chaleur (3002, 4002, 5002, 6002).

14. Installation selon l'une des revendications 9 à 13, dans laquelle les moyens d'application contrôlée d'une perte de charge (3003, 4003, 5003, 6003) sont disposés sur l'évacuation du gaz de fluidisation (3013, 4013, 5013, 6013) à l'extérieur dudit échangeur de chaleur (3002, 4002, 5002, 6002).

15. Installation selon la revendication 14, dans laquelle l'installation comprend des moyens de refroidissement desdits moyens d'application contrôlée de la perte de charge (3003, 4003, 5003, 6003), de préférence un circuit de circulation d'un liquide de refroidissement disposé en contact avec lesdits moyens d'application contrôlée de la perte de charge (3003, 4003, 5003, 6003).

**16.** Installation selon l'une des revendications 9 à 15, comprenant :

- une première ligne de transport des particules (17, 18) pour acheminer les particules de la masse active issues de la zone de réduction (210) vers la zone d'oxydation (200) ; et
- une deuxième ligne de transport des particules (15, 16) pour acheminer les particules de la masse active issues de la zone d'oxydation (200) vers la zone de réduction (210) ;

et dans laquelle l'échangeur de chaleur (E1) est positionné sur au moins la première ligne de transport des particules (17, 18).

**Patentansprüche**

**1.** Verfahren zur Verbrennung einer Kohlenwasserstoff-Charge (13) durch Chemical-Looping-Combustion, wobei eine partikelförmige redoxaktive Masse zwischen einer Oxidationszone (200) und einer Reduktionszone (210) zirkuliert, um einen Kreislauf zu bilden, worin:

- die Verbrennung der Kohlenwasserstoff-Charge (13) durch Inkontaktbringen mit den Partikeln der redoxaktiven Masse in der Reduktionszone (210) durchgeführt wird;
- die Partikel der redoxaktiven Masse, die aus der Reduktionszone (210) stammen, durch Inkontaktbringen mit einem Oxidationsgasstrom (11) in der Oxidationszone (200) oxidiert werden;
- die Partikel in mindestens einen Wärmetauscher (E1, E2, 3002, 4002, 5002, 6002) geleitet werden, der auf einer Partikeltransportleitung (15, 16, 17, 18) zwischen der Reduktionszone (210) und der Oxidationszone (200) angeordnet ist, und ein Fluidisierungsgas (311, 411, 511, 611) in den Tauscher geleitet wird, um eine dichte Wirbelschicht zu erzeugen, die die Partikel der aktiven Masse umfasst, wobei der Wärmetauscher eine Wärmeaustauschoberfläche (4020, 5020, 6020) in Kontakt mit der Wirbelschicht umfasst;

**dadurch gekennzeichnet, dass** die Wärmerückgewinnung in dem mindestens einen Wärmetauscher (E1, E2, 3002, 4002, 5002, 6002) durch Variieren der Wirbelschichthöhe durch gesteuertes Erzeugen eines Druckabfalls an einem Auslass des Fluidisierungsgases (3013, 4013, 5013, 6013), der in einem oberen Teil des Wärmetauschers angeordnet ist, gesteuert wird, wobei der erzeugte Druckabfall durch die Variation der Höhe einer Schicht aus Partikeln der aktiven Masse in einer Reservoirzone (3001, 4001, 5001, 6001) ausgeglichen wird, die sich an dem Chemical-Looping-Combustion-Partikelkreislauf befindet.

**2.** Verfahren nach Anspruch 1, wobei:

- die Partikel der aktiven Masse in die Reservoirzone (5001) geleitet werden, die sich stromaufwärts des Wärmetauschers (5002) befindet, wobei die Reservoirzone und der Wärmetauscher in einem einzigen Gehäuse (5010) enthalten sind, das mit einer Wand (5015) versehen ist, die das Gehäuse vertikal in einen ersten Teil, der die Reservoirzone (5001) bildet, und einen zweiten Teil, der den Wärmetauscher (5002) bildet, unterteilt,
- der in dem Wärmetauscher (5002) erzeugte Druckabfall durch eine Variation der Höhe der Partikelschicht vorzugsweise der Partikelwirbelschicht, in der Reservoirzone (5001) ausgeglichen wird, die mit der Wirbelschicht des Wärmetauschers über einen Durchgang (5012) in der Wand (5015) des Gehäuses (5010) verbunden ist.

**3.** Verfahren nach Anspruch 1, wobei die Partikel der aktiven Masse durch ein Einlassstück des Wärmetauschers in den Wärmetauscher (4002, 6002) geleitet werden, wobei das Einlassstück die Reservoirzone (4001, 6001) bildet.

**4.** Verfahren nach einem der vorhergehenden Ansprüche, wobei die Partikel der aktiven Masse des Wärmetauschers (6002) durch ein Rohr (6014) abgeführt werden, das sich im unteren Teil des Wärmetauschers befindet, wobei das Rohr (6014) eine Siphonform aufweist.

**5.** Verfahren nach einem der Ansprüche 1 bis 4, wobei das Öffnen eines mechanischen Ventils gesteuert wird, das am Auslass des Fluidisierungsgases des Wärmetauschers zum gesteuerten Erzeugen des Druckabfalls angeordnet ist.

**6.** Verfahren nach einem der Ansprüche 1 bis 5, wobei die Temperatur der Einrichtungen zum gesteuerten Erzeugen eines Druckabfalls (3003, 4003, 5003, 6003) gesteuert wird, die auf dem Auslass des Fluidisierungsgases (3013, 4013, 5013, 6013) außerhalb des Wärmetauschers (E1, E2, 3002, 4002, 5002, 6002) angebracht sind.

7. Verfahren nach Anspruch 6, wobei die Einrichtungen zum gesteuerten Erzeugen eines Druckabfalls (3003, 4003, 5003, 6003) durch Inkontaktbringen mit einem Kühlmittelkreislaufsystem gekühlt werden.

8. Verfahren nach einem der vorhergehenden Ansprüche, wobei der Wärmeaustausch auf einer Transportleitung (17, 18) durchgeführt wird, die die Partikel der aktiven Masse von der Reduktionszone (210) zur Oxidationszone (200) befördert.

9. Anlage zur Durchführung der Verbrennung einer Kohlenwasserstoffcharge (13) durch Chemical-Looping-Combustion nach einem der Ansprüche 1 bis 8, umfassend:

   - eine Reduktionszone (210) zur Verbrennung der Kohlenwasserstoff-Charge in Kontakt mit einer aktiven Masse in Form von Partikeln;
   - eine Oxidationszone (200) zur Oxidation der aus der Reduktionszone stammenden Partikel der aktiven Masse in Kontakt mit einem Oxidationsgasstrom (11);
   - mindestens eine Transportleitung für die Partikel der aktiven Masse (15, 16, 17, 18) zwischen der Reduktionszone und der Oxidationszone;
   - **dadurch gekennzeichnet, dass** die Anlage eine Vorrichtung zum Steuern des Wärmetauschers (3000, 4000, 5000, 6000) umfasst, umfassend:
   einen Wärmetauscher (3002, 4002, 5002, 6002), der an der mindestens einen Transportleitung angeordnet ist, wobei der Wärmetauscher (3002, 4002, 5002, 6002) umfasst:

       einen Eingang für einen Eingangstrom von Partikeln der aktiven Masse (3012, 4012, 5012, 6012);
       Einrichtungen zum Einspritzen eines Fluidisierungsgases (311, 411, 511, 611), um eine dichte Wirbelschicht aus Partikeln der aktiven Masse zu bilden;
       einen Auslass des ausströmenden Fluidisierungsgases (3013, 4013, 5013, 6013), der sich in einem oberen Teil des Wärmetauschers befindet;
       einen Ausgang (3014, 4014, 5014, 6014) für einen ausströmenden Strom aus Partikeln der aktiven Masse (303, 403, 503, 603) ;
       eine Wärmeaustauschfläche (4020, 5020, 6020) in Kontakt mit der dichten Partikelwirbelschicht;

   - **dadurch gekennzeichnet, dass** der Auslass des ausströmenden Fluidisierungsgases (3013, 4013, 5013, 6013) Einrichtungen zum gesteuerten Erzeugen eines Druckabfalls (3003, 4003, 5003, 6003) umfasst;
   - dadurch, dass sich der Ausgang (3014, 4014, 5014, 6014) für den ausströmenden Strom der Partikel der aktiven Masse (303, 403, 503, 603) in einem unteren Teil des Wärmetauschers befindet;
   - und dadurch, dass die Wärmetauschersteuerungsvorrichtung (3000, 4000, 5000, 6000) ferner umfasst:
   eine Reservoirzone (3001, 4001, 5001, 6001) zum Ausgleichen des Druckabfalls, der am Auslass des Fluidisierungsgases des Wärmetauschers erzeugt wird, wobei sich die Reservoirzone im Chemical-Looping-Combustion-Partikelkreislauf befindet, der zwischen der Reduktionszone (210) und der Oxidationszone (200) gebildet wird.

10. Anlage nach Anspruch 9, wobei der Wärmetauscher (5002) und die Reservoirzone (5001) durch ein einziges Gehäuse (5010) gebildet sind, das mit einer Wand (5015) versehen ist, die das Gehäuse vertikal in einen ersten Teil unterteilt, der die Reservoirzone (5001) bildet, stromaufwärts eines zweiten Teils, der den Wärmetauscher (5002) bildet, wobei die Reservoirzone vorzugsweise Einrichtungen zum Einspritzen eines Fluidisierungsgases umfasst, wobei die Wand einen Durchgang (5012) für die Schicht aus Partikeln der aktiven Masse von der Reservoirzone zum Wärmetauscher umfasst, wobei der Eingang der Partikel über eine Rohr (5016) erfolgt, das im oberen Teil der Reservoirzone angebracht ist.

11. Anlage nach Anspruch 9, wobei der Eingang der Partikel der aktiven Masse in den Wärmetauscher (4002, 6002) über ein Einlassstück des Wärmetauschers erfolgt, wobei das Einlassstück die Reservoirzone (4001, 6001) bildet.

12. Anlage nach einem der Ansprüche 9 bis 11, wobei der Ausgang für den ausströmenden Partikelstrom, der in dem Wärmetauscher (6002) in einem Rohr (6014) erfolgt, das sich im unteren Teil des Wärmetauschers (6002) befindet, wobei das Rohr (6014) eine Siphonform aufweist.

**13.** Anlage nach einem der Ansprüche 9 bis 12, wobei das gesteuerte Erzeugen eines Druckverlusts über ein mechanisches Ventil erfolgt, das am Auslass des Fluidisierungsgases (3013, 4013, 5013, 6013) des Wärmetauschers (3002, 4002, 5002, 6002) angeordnet ist.

**14.** Anlage nach einem der Ansprüche 9 bis 13, wobei die Einrichtungen zum gesteuerten Erzeugen eines Druckabfalls (3003, 4003, 5003, 6003) auf dem Auslass des Fluidisierungsgases (3013, 4013, 5013, 6013) außerhalb des Wärmetauschers (3002, 4002, 5002, 6002) angebracht sind.

**15.** Anlage nach Anspruch 14, wobei die Anlage Einrichtungen zum Kühlen der Einrichtungen zum gesteuerten Erzeugen des Druckverlusts (3003, 4003, 5003, 6003) umfasst, vorzugsweise ein Kühlmittelkreislaufsystem, das in Kontakt mit den Einrichtungen zum gesteuerten Erzeugen des Druckabfalls (3003, 4003, 5003, 6003) angebracht ist.

**16.** Anlage nach einem der Ansprüche 9 bis 15, umfassend:

- eine erste Partikeltransportleitung (17, 18) zum Befördern der Partikel der aktiven Masse, die aus der Reduktionszone (210) stammen, zur Oxidationszone (200); und
- eine zweite Partikeltransportleitung (15, 16) zum Befördern der Partikel der aktiven Masse, die aus der Oxidationszone (210) stammen, zur Reduktionszone (200);

und wobei der Wärmetauscher (E1) an mindestens der ersten Transportleitung der Partikel (17, 18) angeordnet ist.

## Claims

**1.** A process for chemical looping oxidation-reduction combustion of a hydrocarbon feed (13) wherein a redox active mass in form of particles circulates between an oxidation zone (200) and a reduction zone (210) so as to form a circuit, wherein:

- combustion of said hydrocarbon feed (13) is carried out by contacting with the redox active mass particles in reduction zone (210),
- the redox active mass particles from reduction zone (210) are oxidized by contacting with an oxidizing gas stream (11) in oxidation zone (200),
- the particles are sent to at least one heat exchanger (E1, E2, 3002, 4002, 5002, 6002) positioned on a particle transport line (15, 16, 17, 18) between reduction zone (210) and oxidation zone (200), and a fluidization gas (311, 411, 511, 611) is sent into said exchanger so as to create a dense fluidized bed comprising the active mass particles, said heat exchanger comprising a heat exchange surface (4020, 5020, 6020) in contact with the fluidized bed, **characterized in that**:
the heat recovery is controlled in said at least one heat exchanger (E1, E2, 3002, 4002, 5002, 6002) by varying the fluidized bed level through controlled application of a pressure drop on a fluidization gas outlet (3013, 4013, 5013, 6013) positioned in an upper part of the heat exchanger, the pressure drop applied being compensated by the level variation of an active mass particle bed in a reservoir zone (3001, 4001, 5001, 6001) provided on the particle circuit in the chemical loop.

**2.** A process as claimed in claim 1, wherein:

- the active mass particles are sent to reservoir zone (5001) provided upstream from heat exchanger (5002), said reservoir zone and said heat exchanger being contained in a single enclosure (5010) provided with a wall (5015) that vertically separates the enclosure into a first part forming reservoir zone (5001) and a second part forming heat exchanger (5002),
- the pressure drop applied in heat exchanger (5002) is compensated by a level variation of the particle bed, preferably fluidized, in reservoir zone (5001) communicating with the fluidized bed of the heat exchanger through a passage (5012) in wall (5015) of enclosure (5010).

**3.** A process as claimed in claim 1, wherein the active mass particles are sent to heat exchanger (4002, 6002) through an inlet leg of the heat exchanger, said inlet leg forming reservoir zone (4001, 6001).

**4.** A process as claimed in any one of the previous claims, wherein the active mass particles are discharged from heat exchanger (6002) through a pipe (6014) arranged in the lower part of the heat exchanger, said pipe (6014) having the form of a siphon.

5. A process as claimed in any one of claims 1 to 4, wherein the opening of a mechanical valve positioned on the fluidization gas outlet of the heat exchanger is controlled for controlled application of the pressure drop.

6. A process as claimed in any one of claims 1 to 5, wherein the temperature of the controlled pressure drop application means (3003, 4003, 5003, 6003) positioned on fluidization gas outlet (3013, 4013, 5013, 6013) outside said heat exchanger (E1, E2, 3002, 4002, 5002, 6002) is controlled.

7. A process as claimed in claim 6, wherein said controlled pressure drop application means (3003, 4003, 5003, 6003) are cooled by contacting with a cooling fluid circulation circuit.

8. A process as claimed in any one of the previous claims, wherein the heat exchange is carried out on a transport line (17, 18) carrying the active mass particles from reduction zone (210) to oxidation zone (200).

9. A unit for chemical looping oxidation-reduction combustion of a hydrocarbon feed (13) as claimed in any one of claims 1 to 8, comprising:

- a reduction zone (210) for combustion of the hydrocarbon feed on contact with an active mass in form of particles,
- an oxidation zone (200) for oxidation of the active mass particles from the reduction zone on contact with an oxidizing gas stream (11),
- at least one active mass particles transport line (15, 16, 17, 18) between the reduction zone and the oxidation zone,
- a heat exchange control device (3000, 4000, 5000, 6000) comprising a heat exchanger (3002, 4002, 5002, 6002) positioned on said at least one transport line, said heat exchanger (3002, 4002, 5002, 6002) comprising:

an inlet for an incoming stream of active mass particles (3012, 4012, 5012, 6012),
fluidization gas injection means (311, 411, 511, 611) for forming a dense fluidized bed of active mass particles,
an outgoing fluidization gas outlet (3013, 4013, 5013, 6013) provided in an upper part of the heat exchanger,
an outlet (3014, 4014, 5014, 6014) for an outgoing stream of active mass particles (303, 403, 503, 603),
a heat exchange surface (4020, 5020, 6020) in contact with the dense fluidized particle bed,

- **characterized in that**:
said outgoing fluidization gas outlet (3013, 4013, 5013, 6013) comprises controlled pressure drop application means (3003, 4003, 5003, 6003);
- said outlet (3014, 4014, 5014, 6014) for an outgoing stream of active mass particles (303, 403, 503, 603) is provided in a lower part of the heat exchanger;
- and said heat exchange control device (3000, 4000, 5000, 6000) also comprises a reservoir zone (3001, 4001, 5001, 6001) for compensating the pressure drop applied on the fluidization gas outlet of the heat exchanger, said reservoir zone being positioned on the particle circuit of the chemical loop provided between reduction zone (210) and oxidation zone (200).

10. A unit as claimed in claim 9, wherein heat exchanger (5002) and reservoir zone (5001) consist of a single enclosure (5010) provided with a wall (5015) that vertically separates said enclosure into a first part forming reservoir zone (5001) upstream from a second part forming heat exchanger (5002), the reservoir zone preferably comprising fluidization gas injection means, said wall comprising a passage (5012) for the active mass particle bed from the reservoir zone to the heat exchanger, the particles flowing in through a pipe (5016) provided in the upper part of the reservoir zone.

11. A unit as claimed in claim 9, wherein the active mass particles flow into heat exchanger (4002, 6002) through an inlet leg of the heat exchanger, said inlet leg forming reservoir zone (4001, 6001).

12. A unit as claimed in any one of claims 9 to 11, wherein the outgoing particle stream in heat exchanger (6002) flows out through a pipe (6014) provided in the lower part of heat exchanger (6002), said pipe (6014) having the form of a siphon.

13. A unit as claimed in any one of claims 9 to 12, wherein controlled application of a pressure drop is achieved through a mechanical valve positioned on fluidization gas outlet (3013, 4013, 5013, 6013) of heat exchanger (3002, 4002, 5002, 6002).

14. A unit as claimed in any one of claims 9 to 13, wherein controlled pressure drop application means (3003, 4003, 5003, 6003) are arranged on fluidization gas outlet (3013, 4013, 5013, 6013) outside said heat exchanger (3002, 4002, 5002, 6002).

15. A unit as claimed in claim 14, wherein the unit comprises means for cooling said controlled pressure drop application means (3003, 4003, 5003, 6003), preferably a cooling liquid circulation circuit in contact with said controlled pressure drop application means (3003, 4003, 5003, 6003).

16. A unit as claimed in any one of claims 9 to 15, comprising:

- a first particle transport line (17, 18) for carrying the active mass particles from reduction zone (210) to oxidation zone (200),
- a second particle transport line (15, 16) for carrying the active mass particles from oxidation zone (200) to reduction zone (210),

and wherein heat exchanger (E1) is positioned on at least first particle transport line (17, 18).

FIG. 1

ART ANTERIEUR

FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20110120560 A
- US 2012167808 A
- US 4716856 A
- EP 0090641 A2
- WO 2011007055 A

### Littérature non-brevet citée dans la description

- **Q. WANG et al.** *Chemical Engineering and Processing,* 2003, vol. 42, 327-335
- **WANG et al.** *Chemical Engineering and Processing,* 2003, vol. 42, 327-335
- **YAZDANPANAH et al.** An experimental investigation of loop-seal operation in an interconnected circulating fluidized bed system. *Powder Technology,* Mars 2013, vol. 237, ISSN 0032-5910, 266-275